# EUROPÄISCHE PATENTSCHRIFT

(11) **EP 1 590 198 B1**
(45) Veröffentlichungstag und Bekanntmachung des Hinweises auf die Patenterteilung: **05.07.2006**
(21) Anmeldenummer: 04704598.4
(22) Anmeldetag: 23.01.2004
(51) Int. Cl.: B60N 2/015

(54) **VERRIEGELUNGSVORRICHTUNG FÜR EINEN FAHRZEUGSITZ**
LOCKING MECHANISM FOR A VEHICLE SEAT
DISPOSITIF DE VERROUILLAGE POUR SIEGE DE VEHICULE

(30) Priorität: 05.02.2003 DE 10304574
(43) Veröffentlichungstag der Anmeldung: 02.11.2005
(73) Patentinhaber: KEIPER GmbH & Co. KG, 67657 Kaiserslautern (DE)
(72) Erfinder: MÜLLER, Peter, 67661 Kaiserslautern (DE); CHRISTOFFEL, Thomas, 66909 Herschweiler (DE); YASAROGLU, Kadir, 67661 Kaiserslautern (DE); TRAUTMANN, Holger, 66459 Kirkel (DE)
(74) Vertreter: Patentanwälte Hosenthien-Held und Dr. Held
(86) Internationale Anmeldenummer: PCT/EP2004/000543
(87) Internationale Veröffentlichungsnummer: WO 2004/069585

(56) Entgegenhaltungen:
- EP-A- 1 068 985
- WO-A-02/03207
- DE-A- 4 320 626
- DE-U- 20 302 007
- US-A- 5 730 480
- US-A- 6 123 379

## Beschreibung

Die Erfindung betrifft eine Verriegelungsvorrichtung für einen Fahrzeugsitz, insbesondere für einen Kraftfahrzeugsitz, mit den Merkmalen des Oberbegriffs des Anspruches 1.

Bei Drehfallenschlössern ist das Sicherungselement als ein Riegel ausgebildet, welcher im verriegelten Zustand an der ersten Funktionsfläche der Klinke im Selbsthemmungsbereich anliegt, während im geöffneten Zustand eine Feder die Klinke offenhält. Aus der DE 43 20 626 A 1 ist eine Verriegelungsvorrichtung der eingangs genannten Art für eine freischwenkbare Rückenlehne bekannt, bei welcher die Klinke von einem Sperrdaumen im verriegelten Zustand gesichert und von einem Rastzahn des gleichen Hebels im entriegelten Zustand offen gehalten wird.

Der Erfindung liegt die Aufgabe zu Grunde, eine Verriegelungsvorrichtung der eingangs genannten Art zu verbessern. Diese Aufgabe wird erfindungsgemäß durch eine Verriegelungsvorrichtung mit den Merkmalen des Anspruches 1 gelöst. Vorteilhafte Ausgestaltungen sind Gegenstand der Unteransprüche.

Der Begriff "Ecke" soll jeweils in einem weiten Sinne verstanden werden und dabei auch Bereiche mit Radien umfassen. Insbesondere soll der Begriff auch Bereiche bezeichnen, die nicht nur punktförmig sind, also Nasen, Rücken und Lippen. Das Fangstücks ist im Normalfall in geringem Abstand zur ersten Funktionsfläche angeordnet und stützt im Crashfall mit der Fangfläche die Klinke an deren erster Funktionsfläche ab, und zwar in der Regel formschlüssig, so dass ein eventuelles Öffnen des Spannexzenters entgegen dessen Vorspannung folgenlos bleibt. Zur Verbesserung der Verriegelungssicherheit ist die Ecke am Ende der Fangfläche der Punkt mit dem größeren Abstand zur Drehachse des Fangstücks, wobei die Fangfläche vorzugsweise tangential an der Bahn anliegt, welche die Ecke bei Annäherung an die erste Funktionsfläche beschreibt. Auch bei ungünstigen Toleranzen wird dann vermieden, dass das Fangstück seine Endposition aufgrund eines radial anwachsenden Bereiches der Fangfläche nicht erreichen kann.

Durch ein Zusammenwirken des Fangstücks mit einer zweiten Funktionsfläche der Klinke zum Sichern des geöffneten Zustands, wobei das Fangstück in diesem geöffneten Zustand ein öffnendes Moment auf die Klinke ausübt, wird ein vollständiges Öffnen si-chergestellt, insbesondere auch im Vergleich zu Lösungen, bei denen ein Totpunkt oder eine Reibung überwunden werden muss. Dies verhindert Zustände, bei denen das Gegenelement zwar aus einem teilweise geöffneten Hakenmaul der Klinke austreten kann, aber aufgrund von Toleranzen oder Lagerluft nicht wieder einfallen kann. Ausserdem kann durch die erfindungsgemäße Lösung die eigene Vorspannung der Klinke schwächer ausgelegt werden, so dass geringere Bedienkräfte notwendig sind. Das öffnende Moment wird vorzugsweise auf konstruktiv einfach zu verwirklichende Weise dadurch erreicht, dass die Flächennormale der zweiten Funktionsfläche zwischen der Drehachse der Klinke und dem mit dem Gegenelement zusammenwirkenden Bereich der Klinke, beispielsweise einem Hakenmaul oder einer Verzahnung, verläuft. Das Fangstück liegt vorzugsweise mit einer Anlagefläche berührend an der zweiten Funktionsfläche an, damit eine definiert gerichtete Beaufschlagung mit dem öffnenden Moment erfolgt.

Die Fangfläche zum Zusammenwirken mit der ersten Funktionsfläche und die Anlagefläche des Fangstücks an die zweite Funktionsfläche sind in der Regel unterschiedliche Flächen, wobei die Ecke diese vorzugsweise verbindet. Der Beginn der ersten Funktionsfläche wird durch eine weitere, zweite Ecke markiert, welche die erste Funktionsfläche mit der zweiten Funktionsfläche verbindet. Entsprechend den Verhältnissen der Fangfläche weist im verriegelten Zustand kein Punkt der ersten Funktionsfläche einen geringeren Abstand zur Drehachse des Fangstücks auf als die zweite Ecke.

Das Fangstück ist vorzugsweise über eine Feder vorgespannt, beispielsweise eine Zugfeder, welche aufgrund der erfindungsgemäßen Ausübung des öffnenden Momentes schwächer als im Stand der Technik ausgebildet sein kann und beispielsweise an der Klinke oder - zur Verringerung der Bedienkräfte - an einem Gehäuse der Verriegelungsvorrichtung eingehängt sein kann.

Die erfindungsgemäße Verriegelungsvorrichtung kann an verschiedenen Stellen eines Fahrzeugsitzes verwendet werden, beispielsweise zur Bodenanbindung des gesamten Fahrzeugsitzes oder als Lehnenschloss zur Befestigung der Lehne an der Fahrzeugstruk-tur.

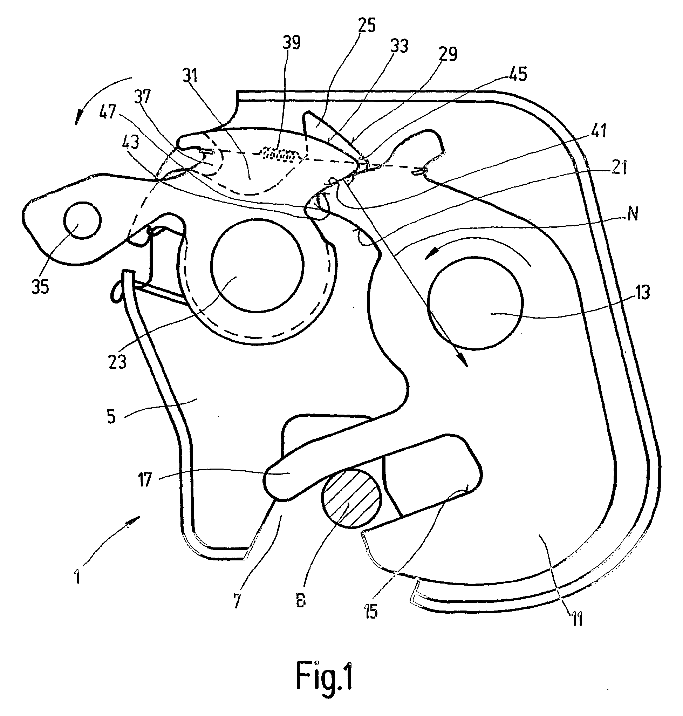

Im folgenden ist die Erfindung anhand eines in der Zeichnung dargestellten Ausführungsbeispiels näher erläutert. Es zeigen
- Fig. 1: einen Schnitt durch das Ausführungsbeispiel beim Öffnungsvorgang,

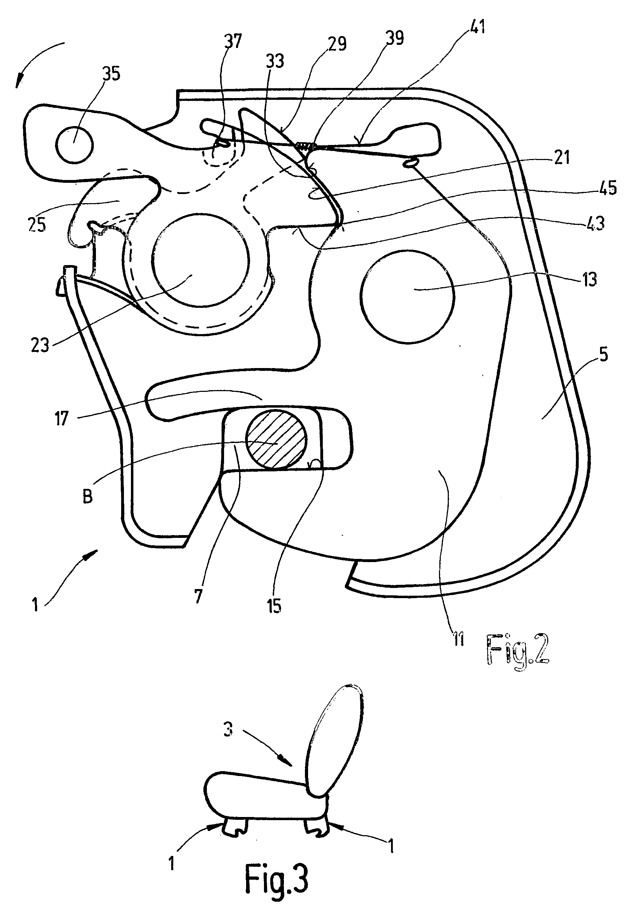

- Fig. 2: einen entsprechenden Schnitt beim Verriegelungsvorgang, und
- Fig. 3: eine schematisierte Darstellung eines Fahrzeugsitzes.

Eine Verriegelungsvorrichtung 1 ist zur Bodenanbindung eines Fahrzeugsitzes 3 in einem Kraftfahrzeug vorgesehen. Die Verriegelungsvorrichtung 1 weist ein Gehäuse 5 mit einer ebenen Grundfläche und hochgezogenen Rändern auf, wobei diese Grundfläche vertikal ausgerichtet ist und die nachfolgend verwendeten Richtungsangaben definiert. Der am Gehäuse 5 anliegende Deckel ist in der Zeichnung nicht dargestellt. Im unteren Bereich des Gehäuses 5 ist eine Bolzenaufnahme 7 ausgebildet, welche sich nach unten öffnet und der Aufnahme eines fahrzeugstrukturfesten Bolzens B oder eines anderen Gegenelementes dient. Dabei ist die Breite der Bolzenaufnahme 7 für einen Spielausgleich größer als der Durchmesser des Bolzens B. Das Gegenelement kann auch ein Abschnitt eines Bügels sein.

Eine Klinke 11 ist auf einem ersten Lagerbolzen 13 schwenkbar gelagert, welcher wiederum fest am Gehäuse 5 angebracht ist und von diesem in horizontaler Richtung absteht. Die Klinke 11 weist zum Zusammenwirken mit dem Bolzen B ein Hakenmaul 15 auf, welches in einem verriegelten Zustand der Verriegelungsvorrichtung 1 die Bolzenaufnahme 7 senkrecht kreuzt, während es in einem geöffneten Zustand sich schräg zur Bolzenaufnahme 7 hin öffnet. Das Hakenmaul 15 wird nach oben hin durch einen Finger 17 der Klinke 11 begrenzt, wobei die so definierte Breite des Hakenmauls 15 geringfügig größer als der Durchmesser des Bolzens B ist. Der Finger 17 befindet sich daher in der verriegelten Stellung etwas oberhalb des oberen Endes der Bolzenaufnahme 7, an welchem der Bolzen B anliegt, während er in der geöffneten Stellung die Bolzenaufnahme 7 schräg kreuzt.

Die Klinke 11 weist eine erste Funktionsfläche 21 auf, welche in der verriegelten Stellung näherungsweise in Richtung eines zweiten Lagerbolzens 23 weist, der parallel zum ersten Lagerbolzen 13 angeordnet und auf gleiche Weise am Gehäuse 5 angebracht ist. Die erste Funktionsfläche 21 ist beispielsweise kreisbogenförmig gekrümmt und konkav ausgebildet. Auf dem zweiten Lagerbolzen 23 ist schwenkbar ein Spannexzenter 25 gelagert, welcher durch eine zwischen Gehäuse 5 und Spannexzenter 25 wirkende Spannfeder 27 zur Klinke 11 hin vorgespannt ist. Im verriegelten Zustand übt der Spannexzenter 25 über eine exzentrisch zum zweiten Lagerbolzen 23 gekrümmte Spannfläche 29, welche sich in nicht-selbsthemmendem Kontakt mit der ersten Funktionsfläche 21 befindet, ein schließendes Moment auf die Klinke 11 aus. Die Spannfläche 29 ist beispielsweise kreisbogenförmig gekrümmt und konvex ausgebildet.

Ein Fangstück 31 ist neben dem Spannexzenter 25 auf der vom Gehäuse 5 abgewandten Seite ebenfalls schwenkbar auf dem zweiten Lagerbolzen 23 gelagert, also mit dem Spannexzenter 25 fluchtend. Das Fangstück 31 weist eine Fangfläche 33 auf, welche sich in Nachbarschaft zur Spannfläche 29 befindet, jedoch im verriegelten Zustand beabstandet zur ersten Funktionsfläche 21 ist. Die Fangfläche 33 ist beispielsweise kreisbogenförmig gekrümmt und konvex ausgebildet. Im Crashfall, wenn die Klinke 11 eventuell ein öffnendes Moment erfährt und den Spannexzenter 25 wegdrückt, gelangt die Fangfläche 33 in Anlage an die erste Funktionsfläche 21, so daß das Fangstück 31 zur Abstützung der Klinke 11 und zur Verhinderung des Öffnens derselben dient.

An einem Arm des Fangstücks 31 steht ein Entriegelungsbolzen 35 senkrecht vom Fangstück 31 ab, also parallel zu den Lagerbolzen 13 und 23. Durch Bewegen dieses Entriegelungsbolzens 35, beispielsweise über einen Hebel oder einen Bowdenzug, vom verriegelten Zustand aus nach unten, schwenkt das Fangstück 31 von der Klinke 11 weg, d.h. die Fangfläche 33 entfernt sich von der ersten Funktionsfläche 21. Über einen am Fangstück 31 angeformten, axial in Richtung des Spannexzenters 25 ragenden Mitnehmer 37 nimmt das Fangstück 31, gegebenenfalls nach einem kleinen Leerhub, den Spannexzenter 25 mit, und zwar gegen den Uhrzeigersinn gemäß der Zeichnung. Die Klinke 11 wird dann nicht länger gesichert. Über eine einerseits am Mitnehmer 37 und andererseits an der Klinke 11 eingehängte Zugfeder 39 zieht das Fangstück 31 die Klinke 11 auf.

Beim Öffnen schiebt sich die Klinke 11 mit einer zweiten Funktionsfläche 41, welche ungefähr quer zur ersten Funktionsfläche 21 ausgerichtet ist, am Spannexzenter 25 und am Fangstück 31 vorbei. Aufgrund der Schwenkbewegung der Klinke 11 zieht sich das Hakenmaul 15 von der Bolzenaufnahme 7 zurück und gibt den Bolzen B frei. Wird der Entriegelungsbolzen 35 losgelassen, so drückt einerseits die Spannfeder 27 den Spannexzenter 25 gegen die zweite Funktionsfläche 41 und andererseits zieht die Zugfeder 39 das Fangstück 31 gegen die zweite Funktionsfläche 41. Der Spannexzenter 25 und das Fangstück 31 liegen mit Anlageflächen 43 berührend an der zweiten Funktionsfläche 41 an, wobei die Flächennormale N der zweiten Funktionsfläche 41 - und in dieser Stellung auch der Anlageflächen 43 - vor dem Zentrum des ersten Lagerbolzens 13, d.h. zwischen dem die Drehachse der Klinke 11 definierenden Zentrum des ersten Lagerbolzens 13 und dem Hakenmaul 15 verläuft. Damit üben der Spannexzenter 25 und das Fangstück 31 über die Anlageflächen 43 ein öffnendes Moment auf die Klinke 11 aus, welches diese geöffnet hält.

Der Spannexzenter 25 und das Fangstück 31 sind somit Sicherungselemente für die Klinke 11 sowohl im verriegelten als auch im geöffneten Zustand. Sofern die Klinke 11 im Falle höherer Reibung allein aufgrund der Zugfeder 39 nicht vollständig öffnen würde, d.h. die das Hakenmaul 15 nach unten abschließende Materialpartie der Klinke 11 teilweise die Bolzenaufnahme 7 kreuzen und so den Einfallsbereich für den Bolzen B verringern würde, sorgt dieses öffnende Moment für ein vollständiges Öffnen der Klinke 11. Da bereits das öffnende Moment des Spannexzenters 25 ein vollständiges Öffnen der Klinke 11 sicherstellen würde, könnte in abgewandelter Form, bei welcher der Bolzen B die Klinke 11 öffnet, die Zugfeder 39 am Gehäuse 5 eingehängt sein.

Gelangt der Bolzen B (oder ein entsprechendes Bauteil an einer weiteren Verriegelungsstelle) in die Bolzenaufnahme 7 und in Anlage an den Finger 17, so drückt der Bolzen B die Klinke 11 zu. Die Anlagefläche 43 des Fangstücks 31 und die Fangfläche 33 stehen über eine erste Ecke 45 in Verbindung miteinander, wobei die erste Ecke 45 ein kleiner Bereich mit einem Radius ist. Die erste Funktionsfläche 21 und die zweite Funktionsfläche 41 stehen über eine entsprechend ausgebildete, zweite Ecke 47 in Verbindung miteinander. Sobald die erste Ecke 45 die zweite Funktionsfläche 41 verläßt, so daß die Anlagefläche 43 des Fangstücks 31 nicht mehr an der zweiten Funktionsfläche 41 anliegt und dies nach minimalem Schwenkweg auch für den Spannexzenter 25 gilt, bewegen-sich das Fangstück 31 und der Spannexzenter 25 aufgrund der Vorspannungen der Spannfeder 27 und der Zugfeder 39 an der zweiten Ecke 47 vorbei und dann entlang der ersten Funktionsfläche 21.

Die konvexe Fangfläche 33 ist dabei so gekrümmt, daß sie von der ersten Ecke 45 aus tangential an der von der ersten Ecke 45 beschriebenen Bahn anliegt und kein radial weiter vorstehender Punkt als die erste Ecke 45 vorhanden ist. Damit ist die Fangfläche 33 entweder exakt um den zweiten Lagerbolzen 23 gekrümmt, d.h. sie beschreibt zugleich die Bahn der ersten Ecke 45, oder sie ist exzentrisch gekrümmt, wobei die erste Ecke 45 den Punkt der Fangfläche 33 mit dem größten Abstand zu dem die Drehachse des Fangstücks 31 definierenden Zentrum des zweiten Lagerbolzens 23 markiert.

Entsprechend ist die konkave erste Funktionsfläche 21 der Klinke 11 so gekrümmt und in dieser Stellung der Klinke 11 so angeordnet, daß sie quasi um den zweiten Lagerbolzen 23 oder exzentrisch hierzu gekrümmt ist, wobei in letzterem Fall die zweite Ecke 47 derjenige Punkt der ersten Funktionsfläche 21 ist, welcher in dieser Stellung der Klinke 11 den geringsten Abstand zu dem die Drehachse des Fangstücks 31 definierenden Zentrum des zweiten Lagerbolzens 23 markiert, also kein radial weiter vorstehender Punkt der ersten Funktionsfläche 21 vorhanden ist.

### Bezugszeichenliste

- 1: Verriegelungsvorrichtung
- 3: Fahrzeugsitz
- 5: Gehäuse
- 7: Bolzenaufnahme
- 11: Klinke
- 13: erster Lagerbolzen
- 15: Hakenmaul
- 17: Finger
- 21: erste Funktionsfläche
- 23: zweiter Lagerbolzen
- 25: Spannexzenter
- 27: Spannfeder
- 29: Spannfläche
- 31: Fangstück
- 33: Fangfläche
- 35: Entriegelungsbolzen
- 37: Mitnehmer
- 39: Zugfeder
- 41: zweite Funktionsfläche
- 43: Anlagefläche
- 45: erste Ecke
- 47: zweite Ecke
- B: Bolzen, Gegenelement
- N: Flächennormale

## Patentansprüche

1. Verriegelungsvorrichtung für einen Fahrzeugsitz, insbesondere für einen Kraftfahrzeugsitz, mit einer schwenkbar gelagerten Klinke (11) zum Verriegeln mit einem Gegenelement (B) und mit einem Spannexzenter (25) und einem Fangstück (31) als Sicherungselementen, welche durch Zusammenwirken mit einer ersten Funktionsfläche (21) der Klinke (11) einen verriegelten Zustand sichern, wobei der federbelastete Spannexzenter (25) im verriegelten Zustand über eine Spannfläche (29) auf die erste Funktionsfläche (21) einwirkt und das Fangstück (31) im Crashfall mit einer Fangfläche (33) die Klinke (11) an der ersten Funktionsfläche (21) abstützt, wobei das Fangstück (31) an einem Ende der Fangfläche (33) eine Ecke (45) aufweist, welche bei Annäherung der Fangfläche (33) an die erste Funktionsfläche (21) voreilt, **dadurch gekennzeichnet, dass** die Ecke (45) der Punkt der Fangfläche (33) mit dem größten Abstand zur Drehachse (23) des Fangstücks (31) ist.

2. Verriegelungsvorrichtung nach Anspruch 1, **dadurch gekennzeichnet, dass** im Bereich der Ecke (45) die Fangfläche (33) tangential an der Bahn anliegt, welche die Ecke (45) bei Annäherung an die erste Funktionsfläche (21) beschreibt.

3. Verriegelungsvorrichtung nach Anspruch 1 oder 2, **dadurch gekennzeichnet, dass** das Fangstück (31) durch Zusammenwirken mit einer zweiten Funktionsfläche (41) der Klinke (11) einen geöffneten Zustand sichert, wobei das Fangstück (31) in diesem geöffneten Zustand ein öffnendes Moment auf die Klinke (11) ausübt.

4. Verriegelungsvorrichtung nach Anspruch 3, **dadurch gekennzeichnet, dass** die Flächennormale (N) der zweiten Funktionsfläche (41) zwischen der Drehachse (13) der Klinke (11) und dem mit dem Gegenelement (B) zusammenwirkenden Bereich (15) der Klinke (11) verläuft.

5. Verriegelungsvorrichtung nach Anspruch 3 oder 4, **dadurch gekennzeichnet, dass** das Fangstück (31) mit einer Anlagefläche (43) berührend an der zweiten Funktionsfläche (41) anliegt.

6. Verriegelungsvorrichtung nach Anspruch 5, **dadurch gekennzeichnet, dass** die Anlagefläche (43) und die Fangfläche (33) über die Ecke (45) in Verbindung miteinander stehen.

7. Verriegelungsvorrichtung nach einem der Ansprüche 3 bis 6, **dadurch gekennzeichnet, dass** die erste Funktionsfläche (21) und die zweite Funktionsfläche (41) über eine zweite Ecke (47) in Verbindung miteinander stehen.

8. Verriegelungsvorrichtung nach einem der Ansprüche 1 bis 7, **dadurch gekennzeichnet, dass** das Fangstück (31) über eine an der Klinke (11) oder an einem Gehäuse (5) der Verriegelungsvorrichtung (1) eingehängte Feder (39) vorgespannt ist.

9. Fahrzeugsitz (3) mit wenigstens einer Verriegelungsvorrichtung (1) nach einem der Ansprüche 1 bis 8.

## Claims

1. A locking mechanism for a vehicle seat, in particular for a motor vehicle seat, having a pivotably mounted pawl (11) for locking to a mating element (B), and having a clamping eccentric (25) and an intercepting component (31) as securing elements which secure a locked state by interaction with a first functional surface (21) of the pawl (11), the spring-loaded clamping eccentric (25), in the locked state, acting on the first functional surface (21) via a clamping surface (29) and, in the event of a crash, the intercepting component (31) supporting the pawl (11) on the first functional surface (21) by means of an intercepting surface (33), the intercepting component (31) having, at one end of the intercepting surface (33), a corner (45) which is in front as the intercepting surface (33) approaches the first functional surface (21), **characterized in that** the corner (45) is the point of the intercepting surface (33) at the greatest distance from the axis of rotation (23) of the intercepting element (31).

2. The locking mechanism as claimed in claim 1, **characterized in that**, in the region of the corner (45), the intercepting surface (33) bears tangentially on the path described by the corner (45) as it approaches the first functional surface (21).

3. The locking mechanism as claimed in claim 1 or 2, **characterized in that** the intercepting component (31) secures an opened state by interaction with a second functional surface (41) of the pawl (11), the intercepting component (31) exerting an opening moment on the pawl (11) in this opened state.

4. The locking mechanism as claimed in claim 3, **characterized in that** the surface normal (N) of the second functional surface (41) runs between the axis of rotation (13) of the pawl (11) and that region (15) of the pawl (11) which interacts with the mating element (B).

5. The locking mechanism as claimed in claim 3 or 4, **characterized in that** the intercepting component (31) bears against the second functional surface (41) in a tangential manner by means of a bearing surface (43).

6. The locking mechanism as claimed in claim 5, **characterized in that** the bearing surface (43) and the intercepting surface (33) are connected to each other via the corner (45).

7. The locking mechanism as claimed in one of claims 3 to 6, **characterized in that** the first functional surface (21) and the second functional surface (41) are connected to each other via a second corner (47).

8. The locking mechanism as claimed in one of claims 1 to 7, **characterized in that** the intercepting component (31) is prestressed via a spring (39) fitted on the pawl (11) or on a housing (5) of the locking mechanism (1).

9. A vehicle seat having at least one locking mechanism (1) as claimed in claims 1 to 8.

## Revendications

1. Dispositif de verrouillage pour un siège de véhicule, en particulier pour un siège de véhicule automobile, avec un cliquet (11) monté de façon pivotante en vue du verrouillage avec un contre-élément (B) et avec un excentrique de serrage (25) et une pièce d'attache (31) comme éléments de sécurité, lesquels assurent un état verrouillé par coopération avec une première surface fonctionnelle (21) du cliquet (11), à l'occasion de quoi l'excentrique de serrage (25) chargé par ressort agit dans l'état verrouillé, par l'intermédiaire d'une surface de serrage (29), sur la première surface fonctionnelle (21), et supporte la pièce d'attache (31) en cas d'accident par une surface d'attache (33) du cliquet (11) sur la première surface fonctionnelle (21), à l'occasion de quoi la pièce d'attache (31) présente sur une extrémité de la surface d'attache (33) un coin (45), lequel avance lors de l'approche par la surface d'attache (33) de la première surface fonctionnelle (21), **caractérisé par le fait que** le coin (45) est le point de la surface d'attache (33) avec la distance la plus grande par rapport à l'axe de rotation (23) de la pièce d'attache (31).

2. Dispositif de verrouillage selon la revendication 1, **caractérisé par le fait que**, dans la zone du coin (45), la surface d'attache (33) s'appuie tangentiellement sur la trajectoire que décrit le coin (45) lors de l'approche de la première surface fonctionnelle (21).

3. Dispositif de verrouillage selon l'une des revendications 1 ou 2, **caractérisé par** le fait de la pièce d'attache (31) assure un état ouvert par coopération avec une deuxième surface fonctionnelle (41) du cliquet (11), à l'occasion de quoi la pièce d'attache (31) dans cet état ouvert exerce un moment ouvrant sur le cliquet (11).

4. Dispositif de verrouillage selon la revendication 3, **caractérisé par** le fait est que la normale de surface (N) de la deuxième surface fonctionnelle (41) s'étend entre l'axe de rotation (13) du cliquet (11) et la zone (15) du cliquet (11) coopérant avec le contre-élément (B).

5. Dispositif de verrouillage selon l'une des revendications 3 ou 4, **caractérisé par le fait que** la pièce d'attache (31) s'appuie par une surface d'appui (43) en établissant un contact sur la deuxième surface fonctionnelle (41).

6. Dispositif de verrouillage selon la revendication 5, **caractérisé par le fait que** la surface d'appui (43) et la surface d'attache (33) sont en liaison entre elles par l'intermédiaire du coin (45).

7. Dispositif de verrouillage selon l'une des revendications 3 à 6, **caractérisé par le fait que** la première surface fonctionnelle (21) et la deuxième surface fonctionnelle (41) sont en liaison entre elles par l'intermédiaire d'un deuxième coin (47).

8. Dispositif de verrouillage selon l'une des revendications 1 à 7, **caractérisé par le fait que** la pièce d'attache (31) est prétendue par l'intermédiaire d'un ressort (39) accroché sur le cliquet (11) ou un boîtier (5) du dispositif de verrouillage (1).

9. Siège de véhicule (3) avec au moins un dispositif de verrouillage (1) tel que défini à l'une des revendications 1 à 8.
